**Europäisches Patentamt**

**European Patent Office**

**Office européen des brevets**

(11) Veröffentlichungsnummer: **0 395 937**
**A1**

(12) **EUROPÄISCHE PATENTANMELDUNG**

(21) Anmeldenummer: **90107355.1**

(22) Anmeldetag: **18.04.90**

(51) Int. Cl.5: **G01N 27/22**

(30) Priorität: **02.05.89 DE 3914519**

(43) Veröffentlichungstag der Anmeldung:
**07.11.90 Patentblatt 90/45**

(84) Benannte Vertragsstaaten:
**CH DE FR GB LI NL**

(71) Anmelder: **Siemens Aktiengesellschaft**
**Wittelsbacherplatz 2**
**D-8000 München 2(DE)**

(72) Erfinder: **Birkle, Siegfried, Dr.**
**Veit-Stoss-Strasse 46**
**D-8552 Höchstadt/Aisch(DE)**
Erfinder: **Kammermaier, Johann, Dr.**
**Ziehrer Strasse 19**
**D-8025 Unterhaching(DE)**
Erfinder: **Hammerschmidt, Albert, Dr.**
**Coburger Strasse 47a**
**D-8520 Erlangen(DE)**
Erfinder: **Rittmayer, Gerhard, Dr.**
**Eskilstunastrasse 8**
**D-8520 Erlangen(DE)**
Erfinder: **Ahne, Helmut, Dr.**
**Heidestrasse 6**
**D-8551 Rötternbach(DE)**

(54) **Kapazitiver Feuchtesensor.**

(57) Ein kapazitiver Feuchtesensor mit einem zwischen zwei Elektroden angeordneten Dielektrikum aus einem feuchtesensitiven organischen Polymeren erfüllt dann sämtliche Anforderungen in hohem Maße, insbesondere hinsichtlich einer hohen Langzeitstabilität, wenn das organische Polymere ein Polybenzoxazol oder ein Polybenzthiazol ist.

EP 0 395 937 A1

## Kapazitiver Feuchtesensor

Die Erfindung betrifft einen kapazitiven Feuchtesensor mit einem zwischen zwei Elektroden angeordneten Dielektrikum aus einem feuchtesensitiven organischen Polymeren sowie ein Verfahren zur Herstellung eines derartigen kapazitiven Feuchtesensors.

Die Erfassung bzw. Bestimmung von Feuchte in Gasen, besonders in der Luft, spielt bei allen Klimatisierungsfragen, wie bei der Gebäudeklimatisierung sowie in Kühl- oder Gewächshäusern, und bei Trocknungsvorgängen eine wichtige Rolle. Dabei sollen reproduzierbar arbeitende Feuchtesensoren bzw. -fühler, die noch dazu kostengünstig sein sollen, in Verbindung mit einer entsprechenden Meß- und Regelautomatik eine energiesparende Klimatisierung bzw. Trocknung gewährleisten.

Für Messungen der prozeßtechnisch wichtigen relativen Luftfeuchte eignen sich insbesondere kapazitive Feuchtesensoren, bei denen die relative Kapazitätsänderung $\Delta C/C$ mit der im Dielektrikum sorbierten Wassermenge stetig wächst und deshalb auch als Feuchtemeßgröße dient. Hierbei müssen die Feuchtesensoren aber eine Reihe wichtiger Eigenschaften aufweisen, nämlich schnelle Ansprechzeit, geringe oder keine Temperaturabhängigkeit, keine Langzeitdrift, Unempfindlichkeit gegen strömende Gase, Korrosionsbeständigkeit gegen aggressive Medien und geringe Querempfindlichkeit, insbesondere gegenüber organischen Lösungsmitteln. Außerdem müssen die Sensoren elektronisch meßbare Signale liefern, die sich durch moderne Mikrocomputersysteme einfach verarbeiten lassen. Aus schaltungstechnischen Gründen ist ferner ein linearer Zusammenhang zwischen der aufgenommenen Feuchte und dem Sensorsignal von Vorteil.

Kostengünstige kapazitive Feuchtesensoren lassen sich beispielsweise mit dünnen, wasserdurchlässigen Metallelektroden und einem feuchtesensitiven bzw. -empfindlichen organischen Polymeren realisieren, dessen Dielektrizitätszahl sich mit der aufgenommenen Feuchte charakteristisch ändert. Ein derartiger Feuchtesensor ist beispielsweise aus der DE-OS 28 48 034 bekannt. Die Vorteile von Feuchtesensoren der genannten Art sind vor allem eine von der Fließgeschwindigkeit des umgebenden Mediums unabhängige Messung, d.h. Feuchtebestimmung, eine gleichmäßige Meßempfindlichkeit, ein geringer Unterhaltsaufwand und eine schnelle Ansprechgeschwindigkeit (siehe dazu beispielsweise: K. Carr-Brion, "Moisture Sensors in Process Control", Elsevier Applied Science Publishers, London und New York, 1986, Seiten 22 bis 24). Neben der feuchteabhängigen Messung von Kapazitätsänderungen (siehe dazu auch:

"Sensors and Actuators", Vol. 12 (1987), Seiten 291 bis 296, sowie: US-PS 4 164 868) können im übrigen auch Messungen des elektrischen Widerstandes (siehe dazu: "Sensors and Actuators", Vol. 8 (1985), Seiten 23 bis 28, sowie: "Proc. 3rd Int. Conf. Solid-State Sensors and Actuators (Transducers '85), June 11-14, 1985", Seiten 210 bis 212) und Impedanzänderungen (siehe dazu: "Sensors and Actuators", Vol. 13 (1988), Seiten 243 bis 250) als Maß für die relative Luftfeuchtigkeit herangezogen werden.

Als feuchtesensitive Polymere für Feuchtesensoren sind bereits verschiedene Materialien bekannt, beispielsweise:

- Celluloseacetatbutyrat ("IEEE Transactions on Components, Hybrids, and Manufacturing Technologyl", Vol. CHMT-2 (1979), No. 3, Seiten 321 bis 323, sowie: "Sensors and Actuators", Vol. 12 (1987), Seiten 291 bis 296);
- Polyimide ("Proc. 3rd Int. Conf. Solid-State Sensors and Actuators (Transducers '85), June 11-14, 1985", Seiten 217 bis 220);
- vernetzte Copolymere aus Styrolsulfonat und Polyvinylchlorid ("Sensors and Actuators", Vol. 8 (1985), Seiten 23 bis 28);
- Copolymere aus ionischen Monomeren, wie dem Natriumsalz von Styrol-4-sulfonsäure und Methacrylsäure, oder nicht-ionischen Monomeren, wie Styrol und (Meth)acrylsäuremethylester ("Proc. 3rd Int. Conf. Solid-State Sensors and Actuators (Tranducers '85), June 11-14, 1985", Seiten 210 bis 212);
- Pfropf-Copolymere aus Polytetrafluorethylen und Styrol oder 4-Vinylpyridin mit sauren bzw. basischen Gruppen ("Proc. 3rd Int. Conf. Solid-State Sensors and Actuators (Transducers '85), June 11-14, 1985", Seiten 213 bis 216); und
- quaternisierte 4-Vinylpyridin-Styrol-Copolymere und partiell quaternisiertes oder mit Dibrombutan vernetztes Poly-4-vinylpyridin ("Sensors and Actuators", Vol. 13 (1988), Seiten 243 bis 250).

Nachteile von Feuchtesensoren mit Polymermaterialien der vorstehend genannten Art sind vor allem ein begrenzter Meßbereich, eine starke Temperaturabhängigkeit, das Auftreten von Hysterese und eine mangelhafte Langzeitstabilität. Außerdem sind derartige Materialien oft nur als Folien zugänglich, deren verfügbare Dicke eine wünschenswert schnelle Ansprechzeit nicht zuläßt.

Aufgabe der Erfindung ist es, einen kapazitiven Feuchtesensor der eingangs genannten Art mit einem Dielektrikum aus einem feuchtesensitiven organischen Polymeren in der Weise auszugestalten, daß er sämtliche Anforderungen in hohem Maße erfüllt, wobei insbesondere eine hohe Langzeitstabilität gegeben sein muß, d.h. es soll möglichst keine Langzeitdrift erfolgen; außerdem soll eine Strukturierung des Dielektrikums möglich sein.

Dies wird erfindungsgemäß dadurch erreicht, daß das organische Polymere ein Polybenzoxazol oder ein Polybenzthiazol ist.

Polybenzoxazole und Polybenzthiazole sind hochtemperaturstabile Polymere. Schichten aus derartigen Polymeren weisen Eigenschaf ten auf, die sie in hervorragender Weise zur Verwendung als Dielektrikum in kapazitiven Feuchtesensoren geeignet machen. Diese Eigenschaften sind im einzelnen:
- ein weitgehend linearer Zusammenhang zwischen der relativen Feuchte (r.F.) und der Änderung der Dielektrizitätszahl ($\epsilon_r$);
- die Größe der Änderung: ca. 30 % Änderung von $\epsilon_r$ zwischen 0 und 100 % r.F.; dies erlaubt die Verwendung einfacher Schaltungen;
- der geringe Temperaturgang: ca. 15 % Änderung von $\epsilon_r$ zwischen 30 und 95°C bei 100 % r.F.; dies gestattet eine einfache Temperaturkompensation;
- eine gute Reproduzierbarkeit (keine Änderung von $\epsilon_r$ nach einigen Zyklen); und
- eine hervorragende Langzeitstabilität, auch bei hoher Luftfeuchte.

Beim erfindungsgemäßen Feuchtesensor sind die beiden Elektroden vorzugsweise flächig ausgebildet. Da hierbei das zwischen den Elektroden angeordnete Dielektrikum von diesen abgedeckt wird, muß wenigstens eine der beiden Elektroden feuchtedurchlässig sein. Die Elektroden können beispielsweise aber auch kammförmig ausgebildet sein; in diesem Fall ist ein direkter Zutritt der Feuchte zum Dielektrikum möglich. Die beiden Elektroden können auch - mit Abstand voneinander - auf einem Substrat angeordnet sein; das Dielektrikum befindet sich dann auf dem Substrat im Raum zwischen den beiden Elektroden. Die Elektroden bestehen im allgemeinen aus Metall.

Der erfindungsgemäße kapazitive Feuchtesensor wird vorteilhaft in der Weise hergestellt, daß eine Polybenzoxazol- oder Polybenzthiazol-Vorstufe, die ein Prepolymeres darstellt, in Form einer Schicht oder Folie auf eine elektrisch leitfähige Schicht aufgebracht wird. Nachfolgend wird dann getempert, wobei eine Schicht aus Polybenzoxazol bzw. Polybenzthiazol entsteht, d.h. die Polymer-Vorstufe wird in das entsprechende Polymere überge führt, und anschließend wird die Polybenzoxazol- bzw. Polybenzthiazolschicht mit einer zweiten elektrisch leitfähigen Schicht versehen. Da die beiden leitfähigen Schichten, die im allgemeinen aus Metall bestehen, im fertigen Feuchtesensor als Elektroden dienen, muß wenigstens eine dieser Schichten feuchtedurchlässig sein.

Im Vergleich zu bislang verwendeten Materialien weisen die im erfindungsgemäßen Feuchtesensor als Dielektrikum eingesetzten Polybenzoxazole und Polybenzthiazole den Vorteil auf, daß sie -in Form der Polymer-Vorstufen - photostrukturiert werden können. Dies ermöglicht eine rationelle Verarbeitung mit modernen, in der Mikroelektronik üblichen Technologien, wie Feinstrukturierung. Die Strukturierung der Polymervorstufen kann beispielsweise mittels Laserstrahlen erfolgen.

Vorzugsweise wird jedoch der Polybenzoxazol- bzw. Polybenzthiazol-Vorstufe eine photoaktive Komponente zugesetzt und die Schicht bzw. Folie aus der Polymer-Vorstufe wird dann photostrukturiert, und zwar vor der Temperung; die Strukturierung bzw. Verarbeitung erfolgt dabei wie bei konventionellen Positivresists. Eine derartige Vorgehensweise ermöglicht die Herstellung sehr dünner, pin-hole-freier Schichten (Dicke: ca. 0,5 $\mu$m), was für die Ansprechzeit des Feuchtesensors günstig ist. Ferner lassen sich neue Technologien, wie Feinstrukturierung, für kostengünstige, rationelle Produktionsverfahren verwenden, was beispielsweise den Aufbau chipintegrierter Feuchtesensoren erlaubt.

Als photoaktive Komponente können lichtempfindliche Diazochinone zum Einsatz gelangen, insbesondere o-Chinon- und o-Naphthochinondiazide. Derartige photoaktive Komponenten sind beispielsweise aus folgenden Druckschriften bekannt: EP-OS 0 023 662, EP-OS 0 291 779 und DE-OS 37 16 629. Aus diesen Druckschriften sind auch Polybenzoxazol-Vorstufen bekannt, die zur Herstellung des erfindungsgemäßen Feuchtesensors verwendet werden können. Polybenzthiazol-Vorstufen sind beispielsweise aus der DE-OS 34 11 659 bekannt und - ebenso wie Polybenzoxazol-Vorstufen - aus E. Behr, "Hochtemperaturbeständige Kunststoffe", Carl Hanser Verlag München 1969 (siehe dort Seiten 99 bis 102).

Die Polymer-Vorstufen werden vorteilhaft als Lösung in einem organischen Lösungsmittel auf die elektrisch leitfähige Schicht bzw. auf die Elektrode aufgebracht. Als Lösungsmittel wird dabei vorzugsweise N-Methylpyrrolidon verwendet. Daneben können aber auch andere organische Lösungsmittel mit ähnlichen Eigenschaften zum Einsatz gelangen, wie Dimethylformamid und N.N-Dimethylacetamid, sowie Gemische der genannten Lösungsmittel.

Die Lösung wird vorzugsweise mittels Schleudertechnik auf die elektrisch leitfähige Schicht bzw. die Elektrode aufgebracht. Andere mögliche Beschichtungsmethoden sind Tauchen, Sprühen, Bürsten und Rollen. Nach dem Aufbringen der Lösung auf die leitfähige Schicht bzw. Elektrode wird das Lösungsmittel entfernt, d.h. es wird getrocknet. Dies kann bei Raumtemperatur oder bei erhöhter Temperatur erfolgen, wobei auch im Vakuum gearbeitet werden kann. Anschließend wird getempert; die Temperung erfolgt vorzugsweise bei Temperaturen zwischen 300 und 500 °C.

Die Schichten bzw. Folien aus Polymer-Vorstufen, die eine photoaktive Komponente enthalten, werden vor der Temperung - zur Photostrukturierung - mit aktinischem Licht durch eine Maske belichtet, beispielsweise mittels einer Quecksilberdampfhöchstdrucklampe, oder durch Führen eines entsprechenden Lichtstrahls, eines Elektronen- oder Ionenstrahls bestrahlt. Anschließend werden die belichteten bzw. bestrahlten Schicht-oder Folienteile herausgelöst oder abgezogen.

Anhand von Ausführungsbeispielen soll die Erfindung noch näher erläutert werden.

## 1. Herstellung der Polymerschicht bzw. des Dielektrikums

5 g einer löslichen Polybenzoxazol-Vorstufe in Form eines Hydroxypolyamids, hergestellt durch Polykondensation aus 50 Mol-% 3.3'-Dihydroxybenzidin, 50 Mol-% 2.2-Bis(3-amino-4-hydroxyphenyl)-1.1.1.3.3.3-hexafluorpropan und 90 Mol-% Isophthalsäuredichlorid (siehe dazu: "Polym. Letters", Vol. 2 (1964), Seiten 655 bis 659), werden mit einer photoaktiven Komponente in Form eines Naphthochinondiazids, hergestellt aus Bisphenol A und Diazonaphthochinon-5-sulfonsäurechlorid (siehe dazu: DE-OS 26 31 535), in 10 g N-Methylpyrrolidon gelöst; die Lösung wird dann durch ein 0,8 μm-Filter druckfiltriert. Die dabei erhaltene Photoresistlösung wird auf einen mit einer Cr/Ni-Schicht versehenen Siliciumwafer aufgeschleudert (1500 rpm, 20 s), und anschließend wird getrocknet (Umlufttofen, 90 °C). Zur Kontaktierung der Cr/Ni-Schicht wird die Photoresistschicht an zwei Stellen mit einem geeigneten Lösungsmittel, wie N-Methylpyrrolidon, vorsichtig entfernt. Anschließend wird im Diffusionsofen unter Stickstoff als Inertgas getempert, wobei folgendes Temperaturprogramm durchlaufen wird: 1 h bis 170 °C, 1 h bis 300 °C, 1 h bis 400 °C, 0,5 h bei 400 °C, 3 bis 4 h bis Raumtemperatur. Dabei entsteht ein hochtemperaturstabiles Polybenzoxazol.

## 2. Herstellung des kapazitiven Feuchtesensors

Auf eine entsprechend Beispiel 1 hergestellte Polybenzoxazolschicht wird eine Goldelektrode aufgesputtert (Oberflächenwiderstand $R_\square$ = 10 bis 20 Ω). An der unteren Cr/Ni-Elektrode und der oberen Goldelektrode, die feuchtedurchlässig ist, werden mit Hilfe eines Leitfähigkeitsklebers dünne Silberdrähte zur Kontaktierung befestigt.

## 3. Messung des Feuchteverhaltens

Vor der Messung wird der Siliciumwafer bzw. der Feuchtesensor bei einer Temperatur von 30 °C zwei Tage bei 100 % r.F. konditioniert. Anschließend werden die elektrischen Eigenschaften zwischen 0 und 100 % r.F. bei definierten Temperaturen, d.h. bei 30, 60 und 95 °C, gemessen; als Meßwert dient die relative Kapazitätsänderung $\gamma$ = $\Delta C/C$ (d.h. $C_{feucht}-C_{trocken}/C_{trocken}$). Dabei zeigt sich folgendes:

- zwischen $\gamma$ und r.F. liegt eine Linearität vor;
- die Linearität zwischen $\gamma$ und r.F. ist bei allen Temperaturen gegeben;
- die Meßwerte sind reproduzierbar, d.h. sie ändern sich auch nach mehreren Zyklen nicht;
- das Langzeitverhalten ist hervorragend, d.h. sowohl die spezifische Kapazitätsänderung $\gamma$ als auch der Verlustwinkel tan $\delta$ bleibt konstant, und zwar über eine Zeitdauer von mehr als 100 Tagen.

## Ansprüche

1. Kapazitiver Feuchtesensor mit einem zwischen zwei Elektroden angeordneten Dielektrikum aus einem feuchtesensitiven organischen Polymeren, **dadurch gekennzeichnet,** daß das organische Polymere ein Polybenzoxazol oder ein Polybenzthiazol ist.

2. Verfahren zur Herstellung eines kapazitiven Feuchtesensors nach Anspruch 1, **dadurch gekennzeichnet,** daß eine Polybenzoxazol- oder Polybenzthiazol-Vorstufe in Form einer Schicht oder Folie auf eine elektrisch leitfähige Schicht aufgebracht wird, daß nachfolgend getempert wird, wobei eine Schicht aus Polybenzoxazol bzw. Polybenzthiazol entsteht, und daß die Polybenzoxazol- bzw. Polybenzthiazolschicht anschließend mit einer zweiten elektrisch leitfähigen Schicht versehen wird.

3. Verfahren nach Anspruch 2, **dadurch gekennzeichnet,** daß der Polybenzoxazol- bzw. Polybenzthiazol-Vorstufe eine photoaktive Komponente zugesetzt wird, und daß die Schicht bzw. Folie aus der Polymer-Vorstufe vor der Temperung photostrukturiert wird.

4. Verfahren nach Anspruch 2 oder 3, **dadurch gekennzeichnet,** daß die Polymer-Vorstufe als Lösung in einem organischen Lösungsmittel auf die elektrisch leitfähige Schicht aufgebracht wird.

5. Verfahren nach Anspruch 4, **dadurch gekennzeichnet,** daß als Lösungsmittel N-Methylpyrrolidon verwendet wird.

6. Verfahren nach einem oder mehreren der Ansprüche 2 bis 5, **dadurch gekennzeichnet,** daß bei Temperaturen zwischen 300 und 500 °C getempert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>US - A - 4 761 710</u> (CHEN) * Zusammenfassung; Fig. 1; Spalte 2, Zeilen 45-68 * -- | 1,2,4-6 | G 01 N 27/22 |
| A | <u>DE - A1 - 3 339 276</u> (ENDRESS UND HAUSER) * Ansprüche 10-16 * -- | 1-6 | |
| A | <u>EP - A2 - 0 300 575</u> (ENIRICERCHE) * Zusammenfassung; Seite 6, Zeilen 22,23 * ---- | 3 | |
| | | | **RECHERCHIERTE SACHGEBIETE (Int. Cl⁵)** |
| | | | G 01 N |

Der vorliegende Recherchenbericht wurde für alle Patentansprüche erstellt.

| Recherchenort WIEN | Abschlußdatum der Recherche 31-07-1990 | Prüfer NARDAI |
|---|---|---|